# EUROPEAN PATENT APPLICATION

(11) **EP 2 765 786 A1**
(43) Date of publication of application: **13.08.2014**
(21) Application number: 13154242.5
(22) Date of filing: 06.02.2013
(51) Int. Cl.: H04N 21/4722, G06F 17/30

(54) **Method to enhance a video content in a receiving device**

(71) Applicant: Nagravision S.A., 1033 Cheseaux-sur-Lausanne (CH)
(72) Inventor: Sarda, Pierre, 1040 Echallens (CH); Ratnarajah, Diroshan, 1374 Corcelles-sur-Chavornay (CH)
(74) Representative: Leman Consulting S.A.

(57) **Abstract**

The present invention concerns the field of broadcast television program and in particular in a way to improve the user's experience by targeted video content in addition to the current program.

The present invention proposes a method to enhance a video content in a receiving device having a receiving device identification, comprising the steps of :
- receiving a video content,
- analysing the visual content of the video content to determine at least one context information,
- transmitting the video content according to transmission parameters,
- storing in a database the context information and the transmission parameters,
- on a receiving device, selecting the transmission parameters and receiving the video content,
- sending a request for enhanced video content, said request comprising at least the transmission parameters and the receiving device identification,
- from the received transmission parameters, retrieving from the database, the context information,
- retrieving an enhanced video content related to the first context content information,
- sending the enhanced video content, based on the receiving device identification, to the receiving device,
- displaying the enhanced video content by the receiving device.

## Description

### Introduction

The present invention concerns the field of broadcast television program and in particular in a way to improve the user's experience by targeted video content in addition to the current program.

### Background art

In the domain of connected television, Internet Multiscreen TV where the end Devices/Clients are generally connected via the Open Internet, the targeted advertising and the recommendation becomes a must expected feature. Such features require the Head-End to know which Device/User/Client Apps watch what nature of content.

In some Multiscreen TV deployments, sometimes the Live linear channels are streamed without any specific information defining the nature of content. It mostly happens when a Service Provider resell Linear Content coming from another Operator and doesn't have access to detailed metadata or doesn't have a traffic management system that guarantee the synchronization between the information and content potentially delayed a bit due to Transcoding.

The present invention proposes a solution developed in the case that the video content does not contain description metadata, and even though targeted video should be sent to the receiving device on request of the user.

### Brief description of the invention

The present invention proposes a method to enhance a video content in a receiving device having a receiving device identification, comprising the steps of:
- receiving a video content,
- analysing the visual content of the video content to determine at least one context information,
- transmitting the video content according to transmission parameters,
- storing in a database the context information and the transmission parameters,
- on a receiving device, selecting the transmission parameters and receiving the video content,
- sending a request for enhanced video content, said request comprising at least the transmission parameters and the receiving device identification,
- from the received transmission parameters, retrieving from the database, the context information,
- retrieving an enhanced video content related to the first context content information,
- sending the enhanced video content, based on the receiving device identification, to the receiving device,
- displaying the enhanced video content by the receiving device.

The video content is broadcasted by a broadcaster to a plurality of receiving devices, this broadcaster not having the possibility to know the content or type of the video content. This is why the broadcaster comprises an analysis module which receives the same video content that is currently broadcasted, said analysis module carrying out a context recognition.

Context recognition is generally divided into video or audio context analysis. The aim of this analysis is to extract information for the video content (or the audio content) to obtain a context information. This context information can be in the form of a semantic database and classification, and algorithms featuring means to analyze content and compare the analysis results to the semantic database, and return their classification. One example can be found in "Mikko Roininen: Audiovisual Sensing And Context Recognition For Mobile Devices, Tampere University". Other publications related to the search and indexing of video contents are available such as the "Intelligent Access to Digital Video: Informedia Project of the Carnegie University".

Once the context information is determined, the broadcaster stores it in a database, together with the transmission parameters of the video content. The transmission parameters are the identification of the channel on which the video content is transmitted. These parameters could be in the form of the value of the PAT (program association table) or the PMT (program map table). These parameters identify, for the receiving device, the video content uniquely among the video contents transmitted from the broadcaster to the receiving device.

On the receiving device, in case that the user is willing to obtain more information about a current video content, he send, via the receiving device, a request containing the transmission parameters and its identification to the broadcaster.

The broadcaster receives the request and determines the context information related to the received transmission parameters. Based on the context information, the broadcaster can retrieve in its data storage, an enhanced video content that matches the context information and send it to the receiving device.

### Brief description of the drawing

The present invention will be better understood thanks to the attached figure in which the various elements of the invention are illustrated.

### Detailed description

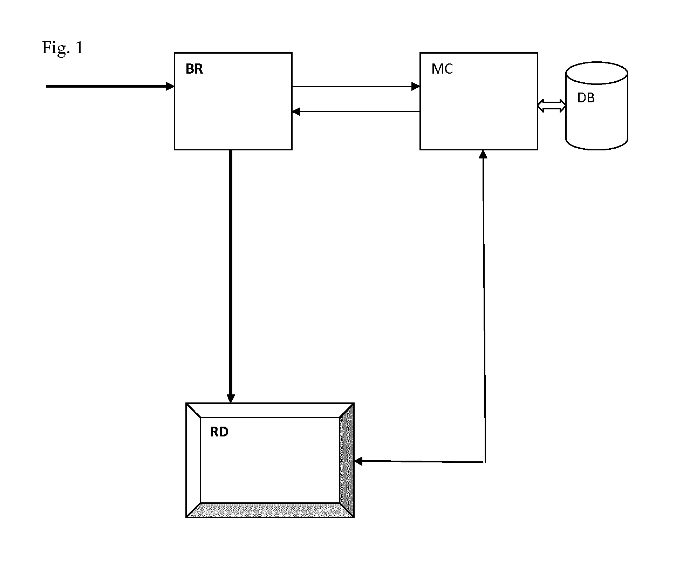

The figure 1 shows the main feed of video contents entering into the broadcaster BR. The sources of the video contents can be diverse and the video contents can come from different sources. The task of the broadcaster is to aggregate and organize the video contents to form a plurality of channels. The channels are then encoded according to the requirements of the transmission means to the receiving devices RD.

The transmission means can be radio frequency transmission, cable network, IP television etc.

Each video content currently broadcasted is passed to a management center MC in charge of analyzing and determining a context information. The analyzing module can be parameterized to calculate the context information on a section of the video content. This analysis can be averaged so as to eliminate the transient images that could change the context information unduly.

The management center stores at least one context information for each video content processed simultaneously. The management center MC receives the video contents as well as the transmission parameters which will be used (or are used) to transmit toward the receiving devices.

As an example, the broadcaster broadcast 10 channels of television programs. A video content is therefore one channel.

On the receiving side, the receiving device RD tunes (or selects) one video content by adjusting the transmission parameters. This can be made by tuning to a particular channel as indicated in the PAT.

The receiving device now receives the video content and displays it. While the video content is displayed, the user enters a command to the receiving device, for example through the remote control. The receiving device then prepares a request containing at least the transmission parameters currently set to receive the video content as well a receiving device identification. This request is sent to the management center MC via telecommunication means, preferably over an Internet connection.

The management center MC receives the request and retrieves the context information in its database thanks to the transmission parameters contained in the request. Based on the context information, the management center determines one enhanced video content and transmits it toward the receiving device.

It is to be noted that the request does not need to have explicit receiving device identification, in particular in the case of a Internet request. The IP protocol contains the requestor identification suitable to send a response to this address.

In case that a plurality of enhanced video content matches the criteria of the context information, additional criteria can be used such as the frequency of the enhanced video content sent before. A counter is attached to each enhanced video content and rules are defined so that the number of transmission is respected. This counter serves also for the reporting, e.g. the number of transmission per day or per week. Finer analysis can be achieved by storing the date and time of each transmission for a given enhanced video content.

Once the enhanced video content is received on the receiving device, it can be displayed straight away or in a deferred mode. In the second case, the enhanced video content is stored on the receiving device and displayed upon request of the user.

According to a particular embodiment, the request sent by the receiving device contains additionally a location identifier of the receiving device. This identifier can be simply extracted from the memory of the receiving device and in the form of ZIP code (or the like) or can be acquired through a GPS embedded in the receiving device. Other determination means can be foreseen such as mobile network nearest tower identifier. Once the management center receives the request, the determination of the suitable enhanced video content is based on the context information and the location.

For example, the user requests additional information while an advertisement for McDonald©is broadcasted. The management center has previously analysed the broadcast content and determined that this content is an advertisement for McDonald© . Once the request is received and the transmission parameters has allowed to retrieve the context information, in our case "McDonald©ad", the management center further determines the special offer in reference of this ad that is currently on at the location indicated in the location identifier (or in the vicinity of the location identifier). The enhanced video content can be simply the video content displaying the nearest address of the advertiser, or the special offer currently available at the nearest restaurant.

The display of the enhanced video content can be made such as an overlay on top of the currently broadcast or in the form of an image superposed (e.g. PIP function or the like) on a part of the main screen.

In the attached figure, the broadcaster BR and the management center MC are two different elements. The present invention also covers the realization of both functions into a single entity or in two different entities. In this second case, the management center MC can be independent and receive the video content in the same manner of the receiving device. The difference lays in the fact that the management center will receive all currently broadcasted video contents and analyze in parallel more than one video content. In this embodiment, the arrow linking the management center to the broadcaster is only one way, i.e. the management center will determine itself the transmission parameters of each transmitted video content.

## Claims

1. Method to enhance a video content in a receiving device having a receiving device identification, comprising the steps of:
- receiving a video content,
- analysing the visual content of the video content to determine at least one context information,
- transmitting the video content according to transmission parameters,
- storing in a database the context information and the transmission parameters,
- on a receiving device, selecting the transmission parameters and receiving the video content,
- sending a request for enhanced video content, said request comprising at least the transmission parameters and the receiving device identification,
- from the received transmission parameters, retrieving from the database, the context information,
- retrieving an enhanced video content related to the first context content information,
- sending the enhanced video content, based on the receiving device identification, to the receiving device,
- displaying the enhanced video content by the receiving device.

2. The method of claim 1, wherein the receiving device comprises a location determination module to produce a location identifier of the receiving device, the method comprising the steps of:
- including in the request the location identifier,
- retrieving the enhanced video content based on the context information and the location identifier.

3. The method of claim 1 or 2, wherein it comprised the steps of:
- assigning a category related to the context information into the database, said category being common to a plurality of context information,
- from the received transmission parameter, determining the category thanks to the database,
- retrieving the enhanced video content related to the category.

4. The method of any of the claims 1 to 3, wherein the advertisement content is overlaid on the video content on the receiving device.

5. The method of any of the claims 1 to 4, wherein the advertisement content is displayed on a portion of a receiving device screen.

6. The method of any of the claims 1 to 5, wherein the first transmission parameters comprises a channel indication and a timestamp.

7. The method of any of the claims 1 to 6, wherein the enhanced video content is first stored into the receiving device for later display.
